# EUROPEAN PATENT APPLICATION

(11) **EP 4 484 518 A1**
(43) Date of publication of application: **01.01.2025**
(21) Application number: 23759973.3
(22) Date of filing: 21.02.2023
(51) Int. Cl.: C09K 5/06

(54) **COLD STORAGE MATERIAL**

(30) Priority: 24.02.2022 JP 2022027321
(71) Applicant: Panasonic Holdings Corporation, Osaka, 571-8501 (JP)
(72) Inventor: MACHIDA, Hironobu, Osaka 571-0057 (JP)
(74) Representative: Grünecker Patent- und Rechtsanwälte PartG mbB
(86) International application number: PCT/JP2023/006229
(87) International publication number: WO 2023/162972

(57) **Abstract**

A cold storage material of the present disclosure includes: at least one salt selected from the group consisting of a tetra-n-butylammonium carboxylate salt and a tetra-n-butylphosphonium carboxylate salt; water; an activated carbon; and a silver compound. The salt includes an anionic atomic group having two or more oxygen atoms. The activated carbon has a basic surface.

## Description

### TECHNICAL FIELD

The present invention relates to a cold storage material.

### BACKGROUND ART

Patent Literature 1 relates to a supercooling elimination device such as an ice thermal storage device configured to be used for air conditioning in buildings or production or processing of food cooled or refrigerated in an ice temperature range.

Patent Literature 2 relates to a heat storage material configured to be included in air conditioning units for heating, cooling, etc. and cooling devices for food, etc. and a heat storage material preparation method.

### CITATION LIST

### Patent Literature

Patent Literature 1: JP H5(1993)-187673 A
Patent Literature 2: JP 2007-246778 A

### SUMMARY OF INVENTION

### Technical Problem

The present disclosure provides a cold storage material including a certain salt, the cold storage material being advantageous in terms of energy saving and a longer cold release period.

### Solution to Problem

A cold storage material according to the present disclosure includes:
at least one salt selected from the group consisting of a tetra-n-butylammonium carboxylate salt and a tetra-n-butylphosphonium carboxylate salt;
water;
activated carbon; and
a silver compound, wherein
the salt includes an anionic atomic group having two or more oxygen atoms, and
the activated carbon has a basic surface.

### Advantageous Effects of Invention

It is thought that an OH⁻ ion is likely to be attracted by and adsorbed onto the surface of the above activated carbon of the cold storage material according to the present disclosure. Moreover, it is thought that a tetra-n-butylammonium hydroxide semiclathrate hydrate or a tetra-n-butylphosphonium hydroxide semiclathrate hydrate is likely to be formed owing to a catalytic action of the silver compound. Therefore, a crystal of a semiclathrate hydrate of the above salt is likely to be formed with a small degree of supercooling, the crystal having a similar crystal structure to the crystal structures of the tetra-n-butylammonium hydroxide semiclathrate hydrate or the tetra-n-butylphosphonium hydroxide semiclathrate hydrate. The melting points of the tetra-n-butylammonium hydroxide semiclathrate hydrate and the tetra-n-butylphosphonium hydroxide semiclathrate hydrate are higher than that of the semiclathrate hydrate of the above salt. Owing to the above activated carbon and the above silver compound, the semiclathrate hydrates having a high melting point are likely to be formed, albeit in small amounts. Hence, most of the semiclathrate hydrate of the above salt having a low melting point are likely to be decomposed at a temperature slightly higher than the melting point of the semiclathrate hydrate of the above salt. This allows the above cold storage material to store cold energy with a small degree of supercooling and store a large amount of latent heat as cold energy. Therefore, the above cold storage material is advantageous in terms of energy saving and a longer cold release period.

### BRIEF DESCRIPTION OF DRAWINGS

FIG. 1 is a graph showing properties of a cold storage material according to Embodiment 1 during cold release.
FIG. 2 shows a cold storage system according to Embodiment 2.

### DESCRIPTION OF EMBODIMENTS

### (Findings on which the present disclosure is based, etc.)

Before the present inventor conceived the present disclosure, various attempts were made to develop techniques for eliminating supercooling of cold storage materials. A cold storage material including at least one salt selected from the group consisting of a tetra-n-butylammonium carboxylate salt and a tetra-n-butylphosphonium carboxylate salt may be provided. A semiclathrate hydrate of the salt has a low melting point as low as, for example, 20°C or lower. A semiclathrate hydrate having a low melting point as low as 20°C or lower and a semiclathrate hydrate having a high melting point as high as 25°C or higher and having a similar crystal structure to that of the semiclathrate hydrate having a low melting point may be used. In this case, for example, when cooling is performed at 5°C, the degree of supercooling of the semiclathrate hydrate having a high melting point is as large as 20 K or more and a crystal of the semiclathrate hydrate having a high melting point is likely to be formed. Consequently, supercooling of the semiclathrate hydrate having a low melting point and having a similar crystal structure to that of the semiclathrate hydrate having a high melting point is likely to be eliminated. Therefore, the semiclathrate hydrate having a low melting point is likely to be formed with a small degree of supercooling.

Meanwhile, a semiclathrate hydrate having a high melting point and a mixed semiclathrate hydrate of a semiclathrate hydrate having a high melting point and a semiclathrate hydrate having a low melting point can be formed simultaneously. It is impossible to decompose these semiclathrate hydrates at a temperature slightly higher than the melting point of the low-melting-point semiclathrate hydrate. A new problem was found in that a large amount of these semiclathrate hydrates can reduce the amount of latent heat that can be used by a cold storage material. Therefore, in the cold storage material industry, it was thought to be difficult to utilize a cold storage material that forms a semiclathrate hydrate for applications where an operation temperature zone is narrow, e.g., in the process of food production or food processing and in air conditioning for cooling. In such applications, the operation temperature zone is determined assuming, for example, storing cold energy at approx. 5°C and releasing cold energy at approx. 11°C.

Under such circumstances, the present inventor searched for an additive that makes it possible to form a crystal of a semiclathrate hydrate at a desired cooling temperature and decompose most of the semiclathrate hydrate at a desired cold release temperature. The desired cooling temperature is, for example, a temperature equal to or higher than a temperature 5°C lower than the melting point of the semiclathrate hydrate. The desired cold release temperature is equal to or higher than a temperature 1°C higher than the melting point. The present inventor searched for such an additive through a lot of trial and error. As a result, the present inventor found that a combination of a particular activated carbon and a particular silver compound can achieve formation of a crystal of a semiclathrate hydrate at the desired cooling temperature and decomposition of most of the semiclathrate hydrate at the desired cold release temperature. On the basis of this new finding, the present inventor has configured the subject matter of the present disclosure.

Hence, the present disclosure provides a cold storage material including at least one salt selected from the group consisting of a tetra-n-butylammonium carboxylate salt and a tetra-n-butylphosphonium carboxylate salt, the cold storage material being advantageous in terms of energy saving and a longer cold release period.

Embodiments of the present disclosure will be described hereinafter with reference to the drawings. An unnecessarily detailed description may be omitted. For example, detailed descriptions of well-known matters and repeated descriptions of substantially the same configurations may be omitted. The accompanying drawings and the description given below are provided to help persons skilled in the art sufficiently understand the present disclosure, and there is no intention to limit the subject matter in the claims.

### (Embodiment 1)

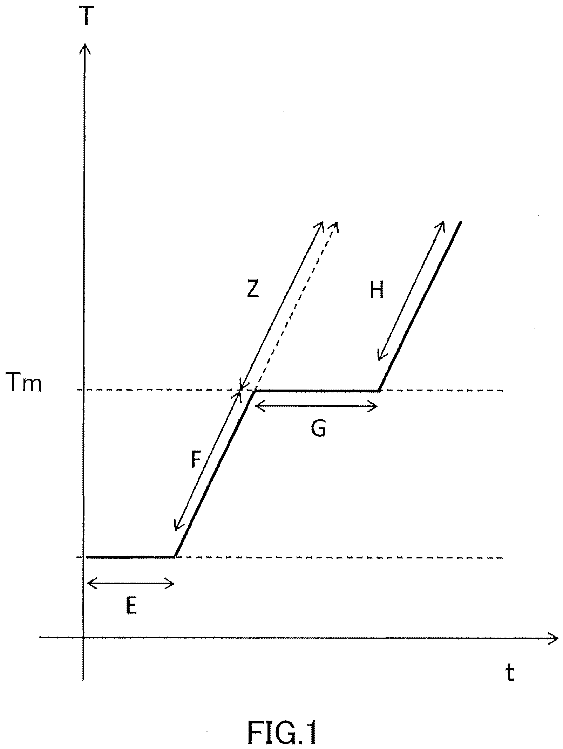

Embodiment 1 will be described hereinafter using FIG. 1.

### [1-1. Configuration]

A cold storage material according to Embodiment 1 includes: at least one salt selected from the group consisting of a tetra-n-butylammonium carboxylate salt and a tetra-n-butylphosphonium carboxylate salt; water; activated carbon; and a silver compound. The salt includes an anionic atomic group having two or more oxygen atoms. The activated carbon has a basic surface.

A semiclathrate hydrate is formed in the course of crystallization of the cold storage material. Herein, a clathrate hydrate refers to a crystal including a cage-like crystal and a guest substance surrounded by the cage-like crystal, the cage-like crystal being made of hydrogen-bonded water molecules being host molecules, the guest substance being a substance other than water. In addition, a semiclathrate hydrate is a crystal formed by introducing a guest substance into a hydrogen bond network of water molecules. A concentration at which water molecules and a guest substance form a hydrate with no excess nor shortage of molecules is called a congruent concentration. In a cold storage material where a clathrate hydrate and a semiclathrate hydrate are formed, the concentration of the guest substance in the cold storage material may be adjusted at or around the congruent concentration.

The cold storage material has a particular melting point. The melting point of the cold storage material can be measured using a differential scanning calorimeter (DSC), as is well known in the technical field of cold storage materials.

FIG. 1 is a graph showing properties of the cold storage material, which was crystallized in advance, during cold release. In FIG. 1, the horizontal axis and the vertical axis respectively represent time t and temperature T. In a zone E shown in FIG. 1, the temperature of the cold storage material is kept at a temperature equal to or lower than its crystallization temperature. For example, the cold storage material is disposed inside a cold storage tank, in which a cooling medium is retained around the cold storage material. The temperature of the cooling medium retained around the cold storage material is adjusted at a temperature equal to or lower than the crystallization temperature of the cold storage material so that the temperature of the cold storage material can be kept at a temperature equal to or lower than the crystallization temperature thereof. The above cooling medium is, for example, water.

Next, a high-temperature cooling medium is supplied into the cold storage tank to gradually warm the cold storage material. Refer to a zone F shown in FIG. 1. For example, by supplying the high-temperature cooling medium into the cold storage tank at the end of the zone E, namely the beginning of the zone F, the temperature around the cold storage material gradually rises.

Reaching a melting point Tm of the cold storage material, the temperature of the cold storage material is maintained around the melting point Tm of the cold storage material. Refer to a zone G shown in FIG. 1. Without the cold storage material inside the cold storage tank, the temperature of the cooling medium retained inside the cold storage tank would continuously rise as shown in a zone Z in FIG. 1. On the other hand, when the cold storage material is inside the cold storage tank, the temperature of the cooling medium retained inside the cold storage tank is maintained around the melting point Tm of the cold storage material in the zone G. The cold storage material thus exhibits its cold storage capability. At the end of the zone G, the crystal of the cold storage material melts and disappears. The cold storage material therefore liquefies. It is understood that the cold storage material has higher cold release performance when the zone G where the temperature of the cold storage material is maintained around the melting point Tm is longer.

After that, the temperature of the liquefied cold storage material rises to be equal to the temperature of the high-temperature cooling medium supplied into the cold storage tank. Refer to a zone H shown in FIG. 1.

The cold storage material can be cooled and reused.

The cold storage material satisfies, for example, the following requirements (I) and (II). The cold storage material satisfying these requirements can have an advantage when used in the process of food production or food processing or in air conditioning for cooling.

Requirement (I): The cold storage material can store cold energy at a temperature of approx. 5°C or higher.

Requirement (II): The cold storage material can release cold energy at approx. 11°C using latent heat and has a latent heat of 165 kJ/kg or more.

As for the requirement (I), for example, in the process of food production or food processing or in air conditioning for cooling, a temperature at which the cooling medium cooled in a chiller using midnight electricity is supplied to the cold storage tank so as to crystallize the cold storage material and store cold energy is approx. 5°C. If the chiller is set at a temperature lower than 5°C, the cooling medium can be frozen depending on the operation conditions of the chiller. The requirement (I) is desirably satisfied for prevention of freezing of the cooling medium.

As for the requirement (II), in the process of food production or food processing and in air conditioning for cooling, cold energy needs to be released at approx. 11°C. For example, the cooling medium stored with cold energy using midnight electricity goes back at approx. 11°C or higher to the cold storage tank during daytime through a circulation path located between the cold storage tank and a cooling target. The cold storage material is required to cool such a cold storage material, and thus it is essential that the cold storage material can release cold energy at approx. 11°C using latent heat. For example, n-pentadecane has a melting point of 9.9°C, and the amount of latent heat involved in melting of n-pentadecane is 164 kJ/kg. Therefore, when the requirement (II) is satisfied, the cold storage material tends to be superior in cold storage performance to a cold storage material including n-pentadecane.

As described above, when the cold storage material of the present disclosure is used, a difference between a cold storage temperature and a cold release temperature can be adjusted to approx. 6°C. Taking account of supercooling inevitable to the cold storage material, the melting point of the cold storage material can be set at a temperature lower than the cold release temperature by 1°C according to conditions of use. Additionally, it is important for the cold storage temperature to be equal to or higher than a temperature 5°C lower than the melting point of the cold storage material. Adjusting the cold storage temperature at a temperature lower than the melting point of the cold storage material by more than 5°C is not advantageous in terms of energy saving because, in that case, the chiller consumes a lot of electricity.

In this technical field, the amount of heat of fusion is also called the amount of latent heat.

The anionic atomic group of the salt of the cold storage material is not limited to a particular atomic group as long as the anionic atomic group has two or more oxygen atoms. The anionic atomic group is, for example, a carboxylate (carboxylate ion) having six or less carbon atoms. The anionic atomic group may include at least one selected from the group consisting of 2-ethyl butanoate, acetate, and pentanoate. In this case, the cold storage material is likely to satisfy the above requirements (I) and (II). The anionic atomic group of the salt of the cold storage material may be SO₄²⁻, CO₃²⁻, PO₄³⁻, or NO₃⁻.

For the cold storage material, a ratio of the amount of the above salt to the amount of the water is not limited to a particular value. The ratio is, for example, 2% or more and 4% or less on a molar basis. When the water and the tetra-n-butylammonium carboxylate salt or the water and the tetra-n-butylphosphonium carboxylate salt form a semiclathrate hydrate with no excess nor shortage of molecules in the cold storage material, the melting point and the amount of latent heat of the cold storage material can be maximized. The concentration of the salt at which the water and the salt form a semiclathrate hydrate with no excess nor shortage of molecules is called a congruent concentration. When the ratio of the amount of the salt to the amount of the water is 2% or more and 4% or less on a molar basis, the concentration of the salt in the cold storage material is likely to be adjusted at or around the congruent concentration.

The activated carbon is not limited to a particular activated carbon as long as the surface thereof is basic. For example, the activated carbon taken out of the cold storage material is washed and is then dispersed in pure water. If the pH of the dispersion is basic, the surface of the activated carbon is judged basic. For example, at least one selected from the group consisting of Na and K may be eluted in the water of the cold storage material from the activated carbon. For example, at least one selected from the group consisting of Na and K may be eluted into pure water from the activated carbon when the activated carbon is dispersed in the pure water.

The concentration of Na dissolved in the water of the cold storage material is not limited to a particular value. The concentration is, for example, 3 mg/L or more. At least a portion of Na eluted in the water of the cold storage material is derived from the activated carbon.

The concentration of K dissolved in the water of the cold storage material is not limited to a particular value. The concentration is, for example, 20 mg/L or more. At least a portion of K eluted in the water of the cold storage material is derived from the activated carbon.

The amount of the activated carbon in the cold storage material is not limited to a particular value. The amount thereof is, for example, 2 mass% or less. In this case, the requirement (II) is more likely to be satisfied.

In the cold storage material, the size of the activated carbon is not limited to a particular value. The activated carbon may include, for example, particles each having a maximum diameter of 1 mm or more. The activated carbon may include particles each having a maximum diameter less than 1 mm.

The activated carbon, for example, was settled at a bottom in the cold storage material in liquid state. A portion of the activated carbon may be suspended in the cold storage material in liquid state.

In the cold storage material, the silver compound is not limited to a particular compound. The silver compound includes, for example, at least one selected from the group consisting of Ag₂O, AgO, Ag₂CO₃, Ag₃PO₄, AgF, Ag₂SO₄, Ag₂CrO₄, Ag₂WO₄, and a silver carboxylate having five or less carbon atoms.

The amount of the silver compound in the cold storage material is not limited to a particular value. A ratio of the amount of the silver compound to the amount of the above salt is, for example, 0.05% or more and 0.10% or less on a molar basis.

The cold storage material may further include an additive which is a component different from the salt, the water, the activated carbon, and the silver compound. Examples of the additive include a supercooling inhibitor, a thickener, and an antiseptic agent.

The cold storage material may be free of additives. In other words, the cold storage material may be composed only of the salt, the water, the activated carbon, and the silver compound.

The cold storage material can be manufactured by mixing the salt, the water, the activated carbon, and the silver compound.

### [1-2. Behavior]

The behavior and the action of the cold storage material according to Embodiment 1 will be described.

During the use of the cold storage material, storing and releasing of cold energy are repeated. As described above, the surface of the activated carbon is basic. Therefore, in storing cold energy, an OH⁻ ion can be attracted by and adsorbed onto the surface of the above activated carbon of the cold storage material. Moreover, a tetra-n-butylammonium hydroxide semiclathrate hydrate or a tetra-n-butylphosphonium hydroxide semiclathrate hydrate can be formed owing to the catalytic action of the silver compound. Hence, in storing cold energy, a crystal of a semiclathrate hydrate of the above salt can be formed with a small degree of supercooling, the crystal having a similar crystal structure to crystal structures of the tetra-n-butylammonium hydroxide semiclathrate hydrate and the tetra-n-butylphosphonium hydroxide semiclathrate hydrate.

In releasing cold energy, the semiclathrate hydrate of the above salt decomposes. The tetra-n-butylammonium hydroxide semiclathrate hydrate or the tetra-n-butylphosphonium hydroxide semiclathrate hydrate can be efficiently formed in a small amount owing to the above activated carbon and the above silver compound. Therefore, in releasing cold energy, most of the semiclathrate hydrate of the above salt is likely to be decomposed at a temperature slightly higher than the melting point of the semiclathrate hydrate of the above salt having a low melting point. For example, 85% or more of the semiclathrate hydrate of the above salt can be decomposed at a temperature equal to or higher than a temperature 1°C higher than the melting point of the semiclathrate hydrate of the above salt.

### [1-3. Effect, etc.]

As described above, in the present embodiment, the cold storage material includes: at least one salt selected from the group consisting of a tetra-n-butylammonium carboxylate salt and a tetra-n-butylphosphonium carboxylate salt; water; activated carbon; and a silver compound. The salt includes an anionic atomic group having two or more oxygen atoms. The activated carbon has a basic surface.

Hence, in storing cold energy in the cold storage material, a crystal of a semiclathrate hydrate of the above salt is likely to be formed with a small degree of supercooling. For example, the crystal of the semiclathrate hydrate of the above salt is likely to be formed at a temperature equal to or higher than a temperature 5°C lower than the melting point of the cold storage material. Therefore, storing cold energy in the cold storage material requires less energy. Additionally, in releasing cold energy, most of the semiclathrate hydrate of the above salt is likely to be decomposed at a temperature slightly higher than the melting point of the semiclathrate hydrate of the above salt having a low melting point. Therefore, a period of time during which cold energy can be released tends to be longer. As described herein, the cold storage material has an advantage in terms of energy saving and a longer cold release period.

As in the present embodiment, for example, at least one selected from the group consisting of Na and K may be eluted in the water of the cold storage material from the activated carbon. In this case, the crystal of the semiclathrate hydrate of the above salt is more likely to be formed with a small degree of supercooling.

As in the present embodiment, Na may be dissolved at 3 mg/L or more in the water of the cold storage material. In this case, the crystal of the semiclathrate hydrate of the above salt is more likely to be formed with a small degree of supercooling.

As in the present embodiment, K may be dissolved at 20 mg/L or more in the water of the cold storage material. In this case, the crystal of the semiclathrate hydrate of the above salt is more likely to be formed with a small degree of supercooling.

As in the present embodiment, the anionic atomic group may be a carboxylate having six or less carbon atoms (carboxylate ion). In this case, the crystal of the semiclathrate hydrate of the above salt is more likely to be formed with a small degree of supercooling.

As in the present embodiment, the anionic atomic group may be 2-ethyl butanoate. In this case, the decomposition temperatures of the semiclathrate hydrates of the tetra-n-butylammonium carboxylate salt and the tetra-n-butylphosphonium carboxylate salt are respectively approx. 9.9°C and approx. 8.3°C. Additionally, the amounts of latent heat of the semiclathrate hydrates of the tetra-n-butylammonium carboxylate salt and the tetra-n-butylphosphonium carboxylate salt are respectively approx. 200 kJ/kg and approx. 195 kJ/kg. In this case, the crystal of the semiclathrate hydrate of the above salt is more likely to be formed with a small degree of supercooling. Additionally, the amount of latent heat that can be stored in the cold storage material as cold energy is likely to be increased. Therefore, the cold storage material is more advantageous in terms of energy saving and a longer cold release period.

As in the present embodiment, the silver compound may include at least one selected from the group consisting of Ag₂O, AgO, Ag₂CO₃, Ag₃PO₄, AgF, Ag₂SO₄, Ag₂CrO₄, Ag₂WO₄, and a silver carboxylate having five or less carbon atoms. In this case, the crystal of the semiclathrate hydrate of the above salt is more likely to be formed with a small degree of supercooling. Therefore, the cold storage material is more advantageous in terms of energy saving and a longer cold release period.

### (Embodiment 2)

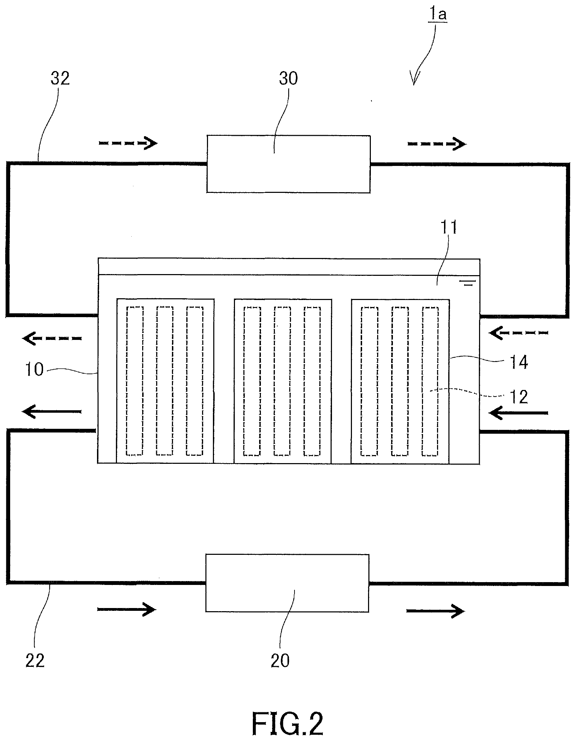

Embodiment 2 will be described hereinafter using FIG. 2.

FIG. 2 shows a cold storage system 1a according to Embodiment 2.

The cold storage system 1a includes a cold storage tank 10, a chiller 20, a cooling target 30, a first circulation path 22, and a second circulation path 32. A cooling medium 11 is retained inside the cold storage tank 10. The cooling medium 11 is, for example, water. The cold storage tank 10 may be disposed, for example, in a basement of a food factory or a building. A plurality of cold storage modules 12 is disposed inside the cold storage tank 10. The cold storage modules 12 are immersed in the cooling medium 11. The cold storage module 12 includes, for example, a resin container having a rectangular parallelepiped outer shape and the above cold storage material contained inside the container. A plate-shaped material forming the container has a thickness of, for example, 3 mm or less. The cold storage material contained inside the container of the cold storage module 12 has a thickness of, for example, 20 mm or less in a solid state.

As shown in FIG. 2, a plurality of cases 14 is disposed inside the cold storage tank 10. The cold storage modules 12 are disposed at a given interval inside the case 14.

The first circulation path 22 is provided between the chiller 20 and the cold storage tank 10. For example, a pump (not illustrated) is disposed in the first circulation path 22. In cold storage operation of the cold storage system 1a, activation of this pump causes the cooling medium 11 to circulate, as indicated by solid arrows in FIG. 2, between the chiller 20 and the cold storage tank 10 through the first circulation path 22. The cold storage material inside the cold storage module 12 is crystallized by thermal exchange between the cooling medium 11 cooled by the chiller 20 and the cold storage module 12, latent heat is stored as cold energy. In cold storage operation of the cold storage system 1a, the chiller 20 is operated, for example, using midnight electricity.

The second circulation path 32 is provided between the cooling target 30 and the cold storage tank 10. For example, a pump (not illustrated) is disposed in the second circulation path 32. In cold release operation of the cold storage system 1a, activation of this pump causes the cooling medium 11 to circulate, as indicated by dashed arrows in FIG. 2, between the cooling target 30 and the cold storage tank 10 through the second circulation path 32. Cold energy is released in such a manner that the cold energy stored in the cold storage material inside the cold storage module 12 as latent heat is released toward the cooling medium 11 by thermal exchange between the cooling medium 11 warmed by the cooling target 30 and the cold storage module 12. Cold release operation of the cold storage system 1a may be carried out, for example, in the daytime where the temperature tends to rise. The cooling target 30 is disposed, for example, in a manufacturing section inside a food factory or a room in a building. In the cold storage system 1a, not only sensible heat of the cooling medium 11 but also latent heat of the cold storage material can be used. This tends to increase the amount of the cold energy that can be stored in the cold storage tank 10.

The number of the cold storage modules 12 disposed inside the cold storage tank 10 is not limited to a particular value. The shape of the cold storage module 12 is not limited to a rectangular parallelepiped shape, and may be a different shape. The size of the cold storage module 12 is not limited to a particular size. The dimensions and the shape of the case 14 of the cold storage system 1a are not limited to particular dimensions and a particular shape. In the cold storage system 1a, the case 14 may be omitted and the plurality of cold storage modules 12 may be directly disposed inside the cold storage tank 10. Having a large volume is advantageous for the cold storage material inside the cold storage tank 10 in terms of increasing the amount of the cold energy that can be stored in the cold storage tank 10. The volume of the cold storage material inside the cold storage tank 10 can be determined taking into account of the balance between the amount of the cold energy and the manufacturing cost.

For example, when the cold storage tank 10 is disposed in a basement of a food factory or a building, it is important to perform quick thermal exchange between the cooling medium and the cold storage material so as to achieve quick storage of cold energy at night and quick release of cold energy during the day. Therefore, having a large surface area is advantageous for the cold storage module 12. For example, it is desirable that the cold storage module 12 be a low profile module having a small dimension in a particular direction and be in a shape having a large surface area. Hence, having a small thickness in a solid state is advantageous for the cold storage material contained inside the container of the cold storage module 12. Moreover, a small thickness of the plate-shaped material forming the container of the cold storage module 12 is advantageous.

### EXAMPLES

The present disclosure will be described in more details with reference to examples below. The present disclosure is not limited to the examples below.

In the examples, tetra-n-butylammonium-acetate is abbreviated as "TBA-Acetate". TBA-Acetate was purchased from Sigma-Aldrich Japan K.K. Tetra-n-butylammonium-pentanoate is abbreviated as "TBA-Pentanoate". TBA-Pentanoate was synthesized by a reaction between silver pentanoate and tetra-n-butylammonium iodide. The silver pentanoate was synthesized by a reaction between pentanoic acid and silver nitrate. The tetra-n-butylammonium iodide and the pentanoic acid were purchased from Tokyo Chemical Industry Co., Ltd. The silver nitrate was purchased from FUJIFILM Wako Pure Chemical Corporation. Tetra-n-butylphosphonium-acetate is abbreviated as "TBP-Acetate". TBP-Acetate was synthesized by a reaction between silver acetate and tetra-n-butylphosphonium iodide. The silver acetate and the tetra-n-butylphosphonium iodide were purchased from FUJIFILM Wako Pure Chemical Corporation. Tetra-n-butylammonium-2-ethylbutanoate is abbreviated as "TBA-2-EB". TBA-2-EB was synthesized by a reaction between silver 2-ethylbutyrate and tetra-n-butylammonium iodide. The silver 2-ethylbutyrate was synthesized by a reaction between 2-ethylbutyric acid and silver nitrate. The tetra-n-butylammonium iodide and the 2-ethylbutyric acid were purchased from Tokyo Chemical Industry Co., Ltd. The silver nitrate was purchased from FUJIFILM Wako Pure Chemical Corporation. Activated carbon A is an activated carbon having a basic surface and is KURARAY COAL, an activated carbon for removing harmful gas or malodorous gas, purchased from KURARAY CO., LTD. Activated carbon B is an activated carbon having an acid surface and is BGX purchased from KURARAY CO., LTD. Ag₂O was purchased from FUJIFILM Wako Pure Chemical Corporation. AgO was purchased from FUJIFILM Wako Pure Chemical Corporation. Ag acetate was purchased from FUJIFILM Wako Pure Chemical Corporation. AgF was purchased from Sigma-Aldrich Japan K.K. Ag₂CO₃ was purchased from FUJIFILM Wako Pure Chemical Corporation.

### (Example 1)

As shown in Table 1, the TBA-Acetate, pure water, the Ag₂O, and the activated carbon A were added into a 9-milliliter screw tube to give a mixture. The mixture was sufficiently stirred inside the screw tube to give a cold storage material according to Example 1. The screw tube was a glass tube having a lid with a screw. When the cold storage material according to Example 1 was in a liquid state, the activated carbon A was at the bottom of the glass tube. The activated carbon A included particles each having a maximum diameter of 1 mm or more.

### (Example 2)

A cold storage material according to Example 2 was obtained in the same manner as in Example 1, except that the TBA-pentanoate, pure water, the Ag₂O, and the activated carbon A were added in amounts shown in Table 1. When the cold storage material according to Example 2 was in a liquid state, the activated carbon A was at the bottom of the glass tube.

### (Example 3)

A cold storage material according to Example 3 was obtained in the same manner as in Example 1, except that the TBP-acetate, pure water, the Ag₂O, and the activated carbon A were added in amounts shown in Table 1. When the cold storage material according to Example 3 was in a liquid state, the activated carbon A was at the bottom of the glass tube.

### (Example 4)

A cold storage material according to Example 4 was obtained in the same manner as in Example 1, except that the TBA-2-EB, pure water, the Ag₂O, and the activated carbon A were added in amounts shown in Table 1. When the cold storage material according to Example 4 was in a liquid state, the activated carbon A was at the bottom of the glass tube.

### (Example 5)

A cold storage material according to Example 5 was obtained in the same manner as in Example 1, except that the TBA-Acetate, pure water, the AgO, and the activated carbon A were added in amounts shown in Table 1. When the cold storage material according to Example 5 was in a liquid state, the activated carbon A was at the bottom of the glass tube.

### (Example 6)

A cold storage material according to Example 6 was obtained in the same manner as in Example 1, except that the TBA-Acetate, pure water, the Ag acetate, and the activated carbon A were added in amounts shown in Table 1. When the cold storage material according to Example 6 was in a liquid state, the activated carbon A was at the bottom of the glass tube.

### (Example 7)

A cold storage material according to Example 7 was obtained in the same manner as in Example 1, except that the TBA-2-EB, pure water, the AgO, and the activated carbon A were added in amounts shown in Table 1. When the cold storage material according to Example 7 was in a liquid state, the activated carbon A was at the bottom of the glass tube.

### (Example 8)

A cold storage material according to Example 8 was obtained in the same manner as in Example 1, except that the TBA-2-EB, pure water, the AgF, and the activated carbon A were added in amounts shown in Table 1. When the cold storage material according to Example 8 was in a liquid state, the activated carbon A was at the bottom of the glass tube.

### (Example 9)

A cold storage material according to Example 9 was obtained in the same manner as in Example 1, except that the TBA-2-EB, pure water, the Ag₂CO₃, and the activated carbon A were added in amounts shown in Table 1. When the cold storage material according to Example 9 was in a liquid state, the activated carbon A was at the bottom of the glass tube.

### (Comparative Example 1)

A cold storage material according to Comparative Example 1 was obtained in the same manner as in Example 1, except that the TBA-Acetate, pure water, and the Ag₂O were added in amounts shown in Table 1. The cold storage material according to Comparative Example 1 was free of activated carbon.

### (Comparative Example 2)

A cold storage material according to Comparative Example 2 was obtained in the same manner as in Example 1, except that the TBA-Acetate, pure water, the Ag₂O, and the activated carbon B were added in amounts shown in Table 1.

### (Comparative Example 3)

A cold storage material according to Comparative Example 3 was obtained in the same manner as in Example 1, except that the TBA-Acetate, pure water, and the activated carbon A were added in amounts shown in Table 1. The cold storage material according to Comparative Example 3 was free of Ag₂O.

### (Measurement of melting point and amount of latent heat)

Approx. 10 mg of a specimen obtained from each of the cold storage materials according to Examples and Comparative Examples was subjected to differential scanning calorimetry (DSC) measurement using a differential scanning calorimeter DSC-8500 manufactured by PerkinElmer Japan G.K. In the measurement, the temperature was adjusted as preprogrammed. First, the temperature of a reference material was kept at 30 degrees Celsius for 10 minutes. Then, the temperature of the reference material was decreased at a rate of 1 degree Celsius per minute. In the process of cooling, a temperature rise accompanying crystallization of the cold storage material was observed as an exothermic peak. After that, the temperature of the cold storage material converged to a programmed temperature. Completion of crystallization of the cold storage material was confirmed by the convergence. After reaching minus 20 degrees Celsius, the temperature of the reference material was kept at minus 20 degrees Celsius for 10 minutes. After that, the temperature of the reference material was increased from minus 20 degrees Celsius to 30 degrees Celsius at a rate of 1 degree Celsius per minute. Once the crystallized cold storage material started melting, the rise in temperature plateaued because as much heat as latent heat was absorbed. Once the melting finished, the temperature converged back to an original, programmed temperature rise line. At this point, the temperature at an endothermic peak was defined as the melting point of the cold storage material, and the amount of absorbed heat was defined as the amount of latent heat of the cold storage material. In this manner, the melting points and the amounts of latent heat of the cold storage materials according to Examples and Comparative Examples were measured using DSC-8500. Table 2 shows the results.

### (Performance evaluation)

A cycle including heating at 20°C for 1 hour, cooling at a temperature lower than the melting point by 5°C for 10 hours, and heating at a temperature higher than the melting point by 1°C for 14 hours was repeated for each of the cold storage materials according to Examples and Comparative Examples. Regarding the cooling at a temperature lower than the melting point by 5°C for 10 hours, a crystallization property of the cold storage material was evaluated as "A" in the case where completion of crystallization of the whole cold storage material was visually confirmed, and the crystallization property was evaluated as "X" in other cases. Regarding the heating at a temperature higher than the melting point by 1°C for 14 hours, a proportion of decomposed crystal in the entire crystal was determined from a visually confirmed decomposition state of crystal. A melting property of the cold storage material was evaluated as "A" in the case where the latent heat that the cold storage material was capable of releasing was estimated to be 165 kJ/kg or more on the basis of this proportion. The melting property was evaluated as "X" in other cases. Table 2 shows the evaluation results for the crystallization properties and the melting properties of the cold storage materials according to Examples and Comparative Examples.

### (Elution test)

The activated carbon A was dispersed in 20°C pure water at a concentration of 40 g/L to give a dispersion. This dispersion was filtered through a syringe filter having a pore size of 0.45 µm to obtain a liquid specimen. A small amount of nitric acid was added to this liquid specimen, and the resulting mixture was diluted 100-fold with pure water to obtain an analysis specimen α.

An aqueous ammonium carboxylate salt solution was obtained in the same manner as in Example 4, except that the activated carbon A and the silver compound were not added. This aqueous solution was filtered through a syringe filter having a pore size of 0.45 µm to obtain a liquid specimen. A small amount of nitric acid was added to this liquid specimen, and the resulting mixture was diluted 1 00-fold with pure water to obtain an analysis specimen β.

An aqueous ammonium carboxylate salt solution including the activated carbon A was obtained in the same manner as in Example 4, except that the silver compound was not added. This aqueous solution was filtered through a syringe filter having a pore size of 0.45 µm to obtain a liquid specimen. A small amount of nitric acid was added to this liquid specimen, and the resulting mixture was diluted 1 00-fold with pure water to obtain an analysis specimen γ.

Inductively coupled plasma mass spectrometry (ICP-MS) was carried out for the analysis specimens α, β, and γ using an ICP-MS system Agilent 7700 manufactured by Agilent Technologies, Inc. to perform semi-quantitative analysis for 69 elements from Li to U. According to the results, from the analysis specimen α, Na was detected at a concentration of 5 mg/L, and K was detected at a concentration of 30 mg/L. From the analysis specimen β, the concentration of detected Na was less than 1 mg/L; substantially no Na was detected. From the analysis specimen γ, Na was detected at a concentration of 6 mg/L, and K was detected at a concentration of 40 mg/L. These results indicate that Na and K are eluted into water of the cold storage material from the activated carbon A.

The cold storage material according to each Example is expected to be able to store cold energy with a small degree of supercooling and store a large amount of latent heat as cold energy. On the other hand, it is indicated that the cold storage material according to each Comparative Example is not expected to store cold energy with a small degree of supercooling and that the amount of latent heat that can be stored in the cold storage material according to each Comparative Example as cold energy is unlikely to be large.

As described above, the cold storage materials according to Examples can store cold energy with a small degree of supercooling and can store a large amount of latent heat as cold energy, compared to the cold storage materials according to Comparative Examples. Therefore, the cold storage materials according to Examples are advantageous in terms of energy saving and a longer cold release period.

**[Table 1]**

| | Ammonium carboxylate salt | | | Pure water | | Silver compound | | | Ratio of amount of substance of silver compound to amount of substance of ammonium carboxylate salt | Activated carbon | |
|---|---|---|---|---|---|---|---|---|---|---|---|
| | Type | Mass [g] | Amount of substance [mol] | Mass [g] | Amount of substance [mol] | Type | Mass [g] | Amount of substance [µmol] | | Type | Mass [mg] |
| Ex. 1 | TBA-Acetate | 0.609 | Approx. 0.0020 | 1.091 | Approx. 0.0606 | Ag₂O | 0.23 | Approx. 1.01 | 0.0005 | Activated carbon A | 10 |
| Ex. 2 | TBA-Pentanoate | 0.661 | Approx. 0.0019 | 1.039 | Approx. 0.0577 | Ag₂O | 0.22 | Approx. 0.96 | 0.0005 | Activated carbon A | 10 |
| Ex. 3 | TBP-Acetate | 0.664 | Approx. 0.0021 | 1.036 | Approx. 0.0576 | Ag₂O | 0.24 | Approx. 1.04 | 0.0005 | Activated carbon A | 10 |
| Ex. 4 | TBA-2-EB | 0.605 | Approx. 0.0017 | 1.095 | Approx. 0.0609 | Ag₂O | 0.19 | Approx. 0.85 | 0.0005 | Activated carbon A | 10 |
| Ex. 5 | TBA-Acetate | 0.609 | Approx. 0.0020 | 1.091 | Approx. 0.0606 | AgO | 0.13 | Approx. 1.01 | 0.0005 | Activated carbon A | 10 |
| Ex. 6 | TBA-Acetate | 0.609 | Approx. 0.0020 | 1.091 | Approx. 0.0606 | Ag acetate | 0.17 | Approx. 1.01 | 0.0005 | Activated carbon A | 10 |
| Ex. 7 | TBA-2-EB | 0.605 | Approx. 0.0017 | 1.095 | Approx. 0.0609 | AgO | 0.10 | Approx. 0.85 | 0.0005 | Activated carbon A | 10 |
| Ex. 8 | TBA-2-EB | 0.605 | Approx. 0.0017 | 1.095 | Approx. 0.0609 | AgF | 0.11 | Approx. 0.85 | 0.0005 | Activated carbon A | 10 |
| Ex. 9 | TBA-2-EB | 0.605 | Approx. 0.0017 | 1.095 | Approx. 0.0609 | Ag₂CO₃ | 0.23 | Approx. 0.85 | 0.0005 | Activated carbon A | 10 |
| Comp. Ex. 1 | TBA-Acetate | 0.609 | Approx. 0.0020 | 1.091 | Approx. 0.0606 | Ag₂O | 0.23 | Approx. 1.01 | 0.0005 | - | |
| Comp. Ex. 2 | TBA-Acetate | 0.609 | Approx. 0.0020 | 1.091 | Approx. 0.0606 | Ag₂O | 0.23 | Approx. 1.01 | 0.0005 | Activated carbon B | 10 |
| Comp. Ex. 3 | TBA-Acetate | 0.609 | Approx. 0.0020 | 1.091 | Approx. 0.0606 | - | | | | Activated carbon A | 10 |

**[Table 2]**

| | Melting point [°C] | Amount of latent heat [kJ/kg] | Crystallization | Melting | | |
|---|---|---|---|---|---|---|
| | | | Judgement | Estimated latent heat used [kJ/kgl | Proportion of decomposed crystal | Judgement |
| Example 1 | 14.2 | 198 | A | 178 or more | 85% or more | A |
| Example 2 | 11.0 | 196 | A | 176 or more | 90% or more | A |
| Example 3 | 11.0 | 196 | A | 176 or more | 90% or more | A |
| Example 4 | 10.0 | 200 | A | 180 or more | 90% or more | A |
| Example 5 | 14.2 | 198 | A | 178 or more | 90% or more | A |
| Example 6 | 14.2 | 198 | A | 178 or more | 90% or more | A |
| Example 7 | 10.0 | 200 | A | 180 or more | 90% or more | A |
| Example 8 | 10.0 | 200 | A | 180 or more | 90% or more | A |
| Example 9 | 10.0 | 200 | A | 180 or more | 90% or more | A |
| Comparative Example 1 | 14.2 | 198 | X | Less than 165 | - | X |
| Comparative Example 2 | 14.2 | 198 | X | Less than 165 | - | X |
| Comparative Example 3 | 14.2 | 198 | X | Less than 165 | - | X |

### INDUSTRIAL APPLICABILITY

The cold storage material of the present disclosure can be used in applications where cooling something or keeping something cool is required, e.g., in food factories, buildings, and the like.

## Claims

1. A cold storage material comprising:
at least one salt selected from the group consisting of a tetra-n-butylammonium carboxylate salt and a tetra-n-butylphosphonium carboxylate salt;
water;
activated carbon; and
a silver compound, wherein
the salt comprises an anionic atomic group having two or more oxygen atoms, and
the activated carbon has a basic surface.

2. The cold storage material according to claim 1, wherein at least one selected from the group consisting of Na and K is eluted in the water from the activated carbon.

3. The cold storage material according to claim 1 or 2, wherein Na is dissolved at 3 mg/L or more in the water.

4. The cold storage material according to any one of claims 1 to 3, wherein K is dissolved at 20 mg/L or more in the water.

5. The cold storage material according to any one of claims 1 to 4, wherein the anionic atomic group is a carboxylate having six or less carbon atoms.

6. The cold storage material according to claim 5, wherein the atomic group is 2-ethyl butanoate.

7. The cold storage material according to any one of claims 1 to 6, wherein the silver compound comprises at least one selected from the group consisting of Ag₂O, AgO, Ag₂CO₃, Ag₃PO₄, AgF, Ag₂SO₄, Ag₂CrO₄, Ag₂WO₄, and a silver carboxylate having five or less carbon atoms.
